# EUROPEAN PATENT SPECIFICATION

(11) **EP 4 335 813 B1**
(45) Date of publication and mention of the grant of the patent: **19.11.2025**
(21) Application number: 23183911.9
(22) Date of filing: 06.07.2023
(51) Int. Cl.: B67D 1/07, B67D 1/08, B67D 1/14, F16K 35/06, F16K 35/10

(54) **LOCKING DEVICE FOR BEVERAGE DISPENSING FAUCETS**
VERRIEGELUNGSVORRICHTUNG FÜR ZAPFHÄHNE
DISPOSITIF DE VERROUILLAGE POUR ROBINETS

(30) Priority: 12.09.2022 IT 202200018540
(43) Date of publication of application: 13.03.2024
(73) Proprietor: CELLI S.p.A., 47842 San Giovanni in Marignano (RN) (IT)
(72) Inventor: CECCARINI, Daniele, 47842 SAN GIOVANNI IN MARIGNANO (RN) (IT); TONONI, Andrea, 47842 SAN GIOVANNI IN MARIGNANO (RN) (IT); CAMPANA, Luca, 47842 SAN GIOVANNI IN MARIGNANO (RN) (IT); PIOVANO, Marco, 47842 SAN GIOVANNI IN MARIGNANO (RN) (IT)
(74) Representative: Mulas, Chiara

(56) References cited:
- GB-A- 2 179 628
- US-A- 5 394 715
- US-A- 5 750 905
- US-A1- 2004 238 569

## Description

The present invention concerns a locking device for liquid dispensing faucets, in particular for faucets of systems dispensing beverages, for example water, beer, wine, and/or soft drinks.

More precisely, the present invention concerns a device locking a liquid dispensing faucet during the sanitisation procedures of a system of the aforementioned type.

The present invention also concerns an assembly comprising a liquid dispensing faucet and said locking device, as well as the use of a locking device.

As is known, the state-of-the-art beverage dispensing systems currently on the market provide one or more sources of beverages, such as water and beer. Each source is then in fluidic connection with a dispensing faucet from whose open end it is possible to dispense the beverage to fill a container, usually a glass, for the final customer's consumption. The fluidic connection between the source and the faucet is obtained through pipes, which are typically made of plastic material, copper, steel, or a mix of these. These pipes tend to become home to mould or bacteria, due to the residues of the beverage itself inside them. As mentioned, such biological agents can modify the flavour of the beverage, which comes into contact with them during the dispensing step as it passes through the pipes of the system itself. An excessively high concentration of biological agents can also be dangerous for human health. Therefore, it is necessary that the beverage dispensing system is periodically sanitised, i.e. the concentration of biological agents present inside the pipes must be reduced, until their elimination, if possible. The sanitisation systems of the beverage dispensing systems currently on the market include a tank containing a sanitising solution, i.e. a chemical compound capable of greatly reducing the concentration of any biological agents such as, for example, bacteria or moulds, once it has come into contact with them. Such sanitising solution is introduced into the pipes that form the system to be sanitised, the sanitising solution is then released from the faucet and then collected in a drain or in a suitably sized container.

However, such sanitisation procedure provides that the faucet of said dispensing systems is in the open or usage configuration, in order to allow a continuous fluid connection between tank and faucet through said pipes of the dispensing system, in such a way as to allow the dispensing of the sanitising solution for a correct sanitisation of the pipes themselves. On the market there are currently various types of faucets for beverage dispensing systems, for example manual and electronic systems. Manual systems usually do not allow the source faucet to be locked in the open position, in this case during the sanitisation procedure an operator must operate and keep the faucet in the open position throughout the procedure. In these systems it is not possible to carry out a sanitisation procedure of the pipes without the intervention of an operator, for example during the night.

Furthermore, the solutions currently on the market do not allow the flow to be directed inside the drain, generating splashes and dirt.

An example of a prior-art retaining mechanism for beverage dispensing system is disclosed in US patent US 5,394,715.

An aim of the present invention is to guarantee a sanitisation procedure without the intervention of an operator by keeping the faucet in the open position throughout the entire duration of the procedure itself.

Therefore an object of the present invention is a locking device according to claim 1.

In particular, according to an embodiment of the invention, said hooking means can comprise a first sensor configured to detect the hooking/unhooking of said locking device to/from said faucet.

Again, according to an embodiment of the invention, said respective first arms of said first and second hooks can be oriented on axes mutually diverging with respect to the first horizontal axis of said body and lying on respective planes parallel to the vertical plane of said body.

Still according to an embodiment of the invention, said respective second arms can have a bevel at their ending part to facilitate gripping.

More particularly according to an embodiment of the invention, said body can comprise a flat portion extending beyond said locking and hooking means, said flat portion being configured to direct the flow of a sanitising liquid in a tank, preventing the dispersion of drops of said liquid.

In particular, according to an embodiment of the invention, said body can comprise a funnel-shaped portion for conveying the liquid dispensed from the nozzle of said faucet, said funnel-shaped portion being arranged on said body below said locking means and hooking means.

Again, according to an embodiment of the invention, the lower part or stem of said funnel-shaped portion may comprise a retaining device configured to allow the coupling/decoupling of said funnel-shaped portion with a drain pipe.

Still according to an embodiment of the invention, said funnel-shaped portion can comprise a second sensor configured to detect the filling level of said funnel-shaped portion.

A further object of the present invention is a kit comprising a first locking device and a second locking device according to claim 9.

A further object of the present invention is the use of the locking device for locking the lever of a liquid beverage dispensing faucet in the dispensing position according to claim 15.

Finally, a further object of the present invention is a system for sanitising a beverage dispensing faucet according to claim 16.

The invention will now be described for illustrative but non-limiting purposes, with particular reference to the drawings of the attached figures, wherein:
Figure 1 shows a perspective view of the locking device according to the invention, in a first embodiment, installed on a manual dispensing faucet in the dispensing position;
Figure 2 shows a perspective view of the device of Figure 1 decoupled from the manual dispensing faucet;
Figure 3 shows a perspective view of the device of Figure 1 during assembly to the manual dispensing faucet;
Figure 4 shows a top view of the device of Figure 1;
Figures 5a - 5d show respectively a perspective, front, side and top view of the locking device of Figure 1;
Figure 6 shows a perspective view of a second locking device, installed on a manual dispensing faucet in the dispensing position;
Figure 7 shows a side view of the device of Figure 6;
Figure 8 shows a rear perspective view of the device of Figure 6;
Figure 9 shows a perspective view of a third locking device, installed on a manual dispensing faucet in the dispensing position;
Figure 10 shows a side view of the device of Figure 9;
Figure 11 shows a rear perspective view of the device of Figure 9;
Figure 12 shows a perspective view of a kit according to the invention comprising the first locking device of Figure 1 in combination with the second locking device of Figure 6;
Figure 13 shows a rear perspective view of the kit of Figure 12;
Figure 14 shows a side view of the kit of Figure 12;
Figure 15 shows a perspective view of a kit according to the invention comprising the first locking device of Figure 1 in combination with the third locking device of Figure 9;
Figure 16 shows a rear perspective view of the kit of Figure 15; and
Figure 17 shows a side view of the kit of Figure 15.

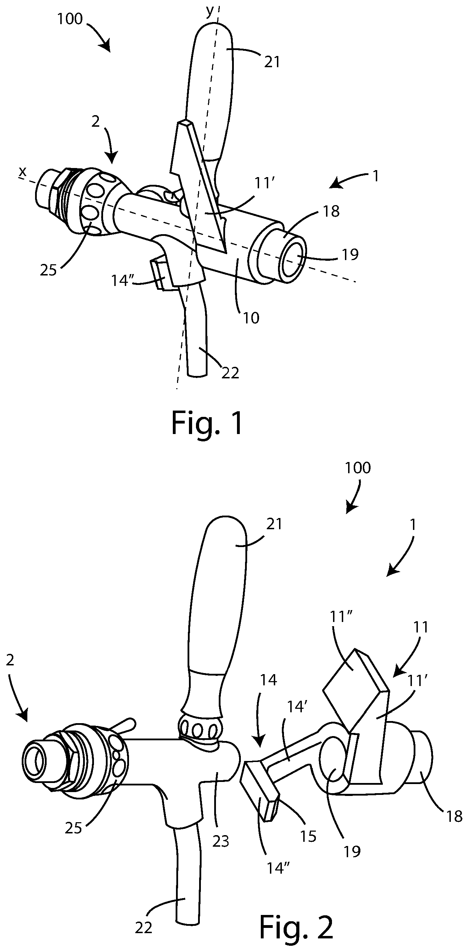

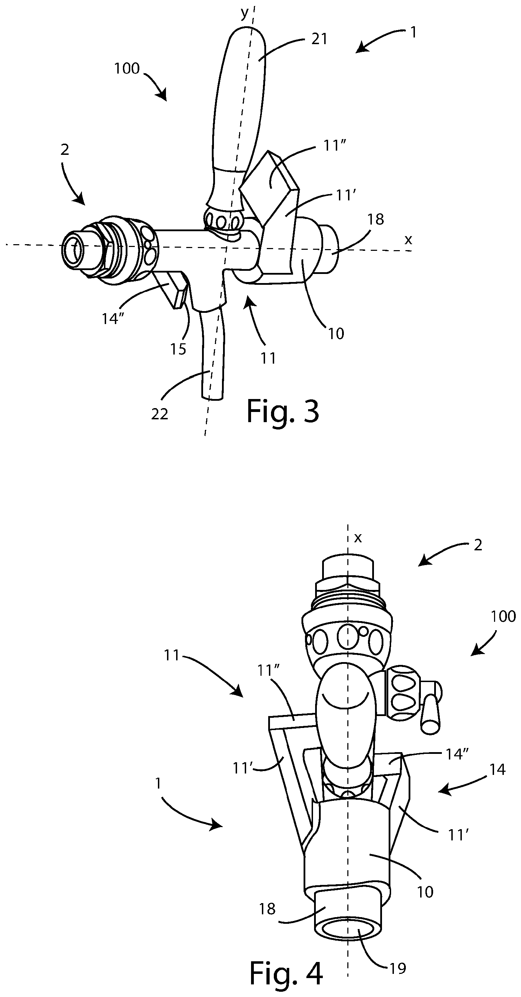

Referring to Figures 1 - 4 and 5a - 5d, a locking device 1 according to the invention can be seen, in a first embodiment, for faucets for dispensing beverages, for example water, beer, wine, and/or soft drinks.

In particular, the locking device 1 makes it possible to lock a faucet 2 in the dispensing position. A faucet 2 for dispensing beverages generally comprises a nozzle 22 for dispensing liquids and a lever 21 for allowing/preventing the dispensing of liquids by assuming a dispensing position or a closed position.

The faucet 2 and the locking device 1 can form an assembly 100.

The faucet 2 of Figure 1 is of the manual type, in other words it is equipped with a dispensing lever 21 having a return spring. When the user acts on the lever 21 by inclining it slightly, it moves to the dispensing position and then, in the absence of action by the user, it automatically returns to the closed position thanks to the spring.

Therefore, the locking device 1 according to the invention in the first embodiment is capable of independently locking the lever 21 of the faucet 2 in the locking position without the intervention of a user.

This makes it possible, for example, to leave the faucet 2 in the dispensing position for a whole night in order to be able to carry out the sanitisation through the passage of a sanitising liquid.

In particular, the locking device 1 according to the present invention comprises a body 10 on which locking means 11, for locking the lever 21 of the faucet 2 in the dispensing position, are arranged. In particular, said body 10 develops horizontally along a first x-axis and vertically along a second y-axis.

In addition, the locking device 1 comprises hooking means 14 configured to hook to a portion of the faucet 2.

Furthermore, said locking device 1 is configured in such a way that, during use, the hooking means 14 are hooked to the faucet 2 and the locking means 11 are associated with the lever 21 locking it in the dispensing position.

As can be seen from the figures, said faucet 2 has a body 24 from which said nozzle 22 and said lever 21 extend along opposite directions of a vertical y-axis. In particular, the body 24 of the faucet 2 extends along a horizontal x-axis, substantially transverse to the vertical y-axis, and has a rear portion 25 for the connection to a supply pipe for the liquid to be dispensed, and a front end 23, said front portion 23 and said rear portion 25 being arranged on opposite ends of said body 24 along said horizontal x-axis. Therefore, when said locking device 1 is hooked to said faucet 2, it hooks in correspondence with the front portion 23 of said faucet 2.

In addition, the hooking means 14 can comprise a first sensor for detecting the hooking/unhooking of the locking device 1 from the faucet 2. In particular, said first sensor can be connected to a logic control unit adapted to start the sanitising cycle when the first sensor communicates to the logic control unit itself that the locking device 1 has been hooked to the faucet 2. Therefore, in the event that the locking device 1 is unhooked by an operator or inadvertently unhooked from the faucet 2, the sanitising cycle would be interrupted, preventing any spills of the sanitising liquid.

Furthermore, in a first embodiment the locking means are a first hook 11 having an "L-shaped" profile and comprising a first arm 11' and a second arm 11". These first 11' and second 11" arms being arranged transversely to each other.

Again, in a first embodiment, the hooking means are a second hook 14 having an "L-shaped" profile and comprising a first arm 14' and a second arm 14". Also in this case, these first 14' and second 14" arms being arranged transversely to each other.

The first and second hooks 11, 14 have respective first arms 11'; 14' fixed on opposite sides of the external surface of the body 10, with respect to the first horizontal x-axis, and respective second arms 11"; 14" facing each other transversely to the first horizontal x-axis.

In fact, the locking device 1 is configured in such a way that, during use, the second arm 14" of said second hook 14 is hooked to the faucet 2 and the second arm 11" of the first hook 11 is hooked to the lever 21, locking it in the beverage dispensing position.

Such hooks 11 and 14 therefore act in opposition to each other hooking to the body of the faucet 2 and to the mobile lever 21 which is then inclined into the dispensing position.

In addition, the respective first arms 11'; 14' of the first and second hooks 11; 14 are oriented on axes t₁₁, t₁₄ diverging from each other with respect to the horizontal x-axis of the body 10 and lying on a respective plane parallel to the vertical XY plane.

Furthermore, the respective second arms 11"; 14" of the first and second hook 11; 14 have a bevel 15 at their ending part to facilitate gripping of the faucet 2 during assembly and/or disassembly.

Again, the body 10 comprises a through hole 19 having the centre of symmetry arranged on the horizontal x-axis. In particular, the through hole 19 allows the housing of one end 23 of the faucet 2, so as to improve the hooking of the locking device 1 to the faucet 2.

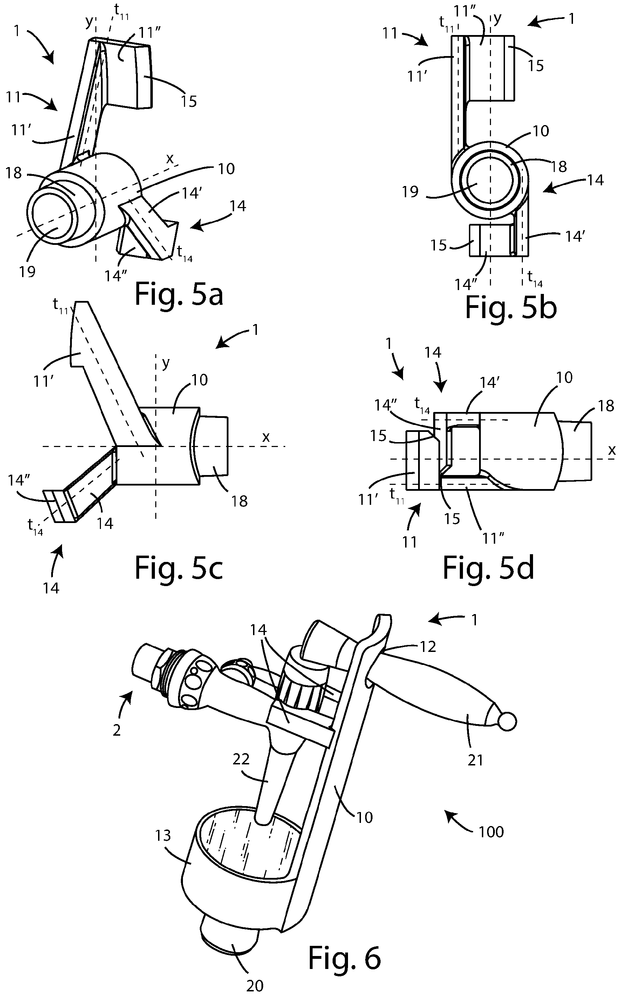

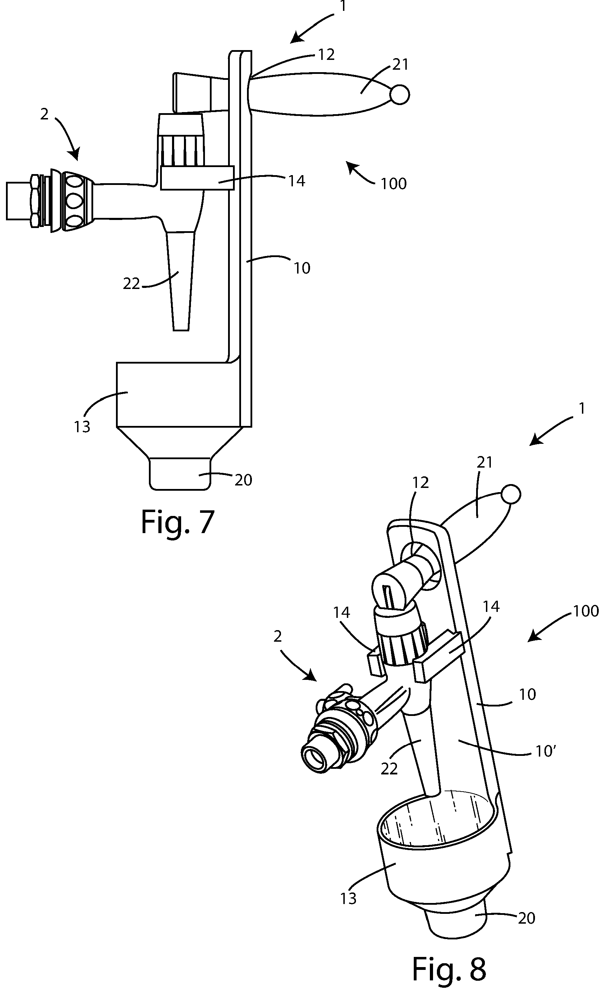

Referring to Figures 6 - 8, a second locking device 1 can be seen.

In this embodiment the same numerical references are used for components that are functionally analogous to the first embodiment.

This locking device 1 is particularly suitable for locking a manual faucet 2 equipped with a dispensing lever 21 without a return spring. This faucet 2 has a lever 21 capable of locking automatically both in the closed position, with the lever 21 substantially parallel to a vertical y-axis, and in the dispensing position, with the lever 21 in a position transverse to this vertical y-axis.

The locking device 1 according to the present embodiment couples with the lever 21 of the faucet 2 in the dispensing position, locking it in that position, as it prevents its movement from that position.

In particular, the locking device 1 comprises a body 10 on which the locking means 12 for locking the lever 21 of said faucet 2 in the dispensing position and the hooking means 14 for hooking to a portion of said faucet 2 are arranged. Said locking device 1 is configured in such a way that, during use, when the hooking means 14 are hooked to the faucet 2, the locking means 12 are associated with the lever 21 locking it in said dispensing position.

In particular, the locking means are a through hole 12 made on the body 10. This through hole 12 has the axis of symmetry parallel to a first horizontal x-axis.

In this second embodiment, the hooking means are a pair of opposing hooks 14 arranged on the body 10. In other words, the locking device 1 is configured in such a way that, during use, when the pair of hooks 14 is hooked to the faucet 2, the lever 21 is inserted in the through hole 12 locking itself in the dispensing position.

Furthermore, each hook 14 comprises a linear concavity or notch 16, to allow a better coupling of the locking device 1 with the body of the faucet 2, in particular with the body of the nozzle 23.

Furthermore, the body 10 of the locking device 1 comprises a flat portion 10' which extends beyond the locking means 12 and the hooking means 14, advantageously this flat portion 10', acting as a splash guard, makes it possible to prevent the dispersion of drops of liquid during dispensing of the liquid itself and to direct the flow into a container.

In addition to this, the body 10 comprises a funnel-shaped portion 13 for conveying the liquid dispensed by the nozzle 22 of the faucet 2. This funnel-shaped portion 13 is arranged on the body 1 below said locking means 11; 12 and said hooking means 14. The funnel-shaped portion 13 has a hole connectable to a pipe for conveying the sanitising liquid into a drain or tank separate from the faucet 2.

Furthermore, the funnel-shaped portion 13 can comprise a second sensor inside it, in particular an overflow sensor, to detect the filling level of the funnel-shaped portion 13 and of the pipe connected thereto. In particular, the second sensor can be connected to a logic control unit capable of interrupting the sanitising cycle, when the second sensor detects a filling level higher than a threshold level, which could be indicative of an obstruction of the funnel-shaped portion 13 or of the respective pipe. In addition, the logic control unit can send a notification to a user if the threshold level is exceeded.

Furthermore, in the lower part 20, in particular in the stem 20, of the funnel-shaped portion 13, a retaining element (not shown) may be present which makes it possible the coupling/decoupling with the drain pipe of the sanitising system. Advantageously, the retention element allows a fluidic connection between the funnel-shaped portion 13 and the pipe, sealing them and preventing any leakage of the sanitising liquid.

In particular, the funnel-shaped portion 13 is coupled with the lower end of the flat portion 10' of the body 10, while at the upper end of this flat portion 10' there is the through hole 12.

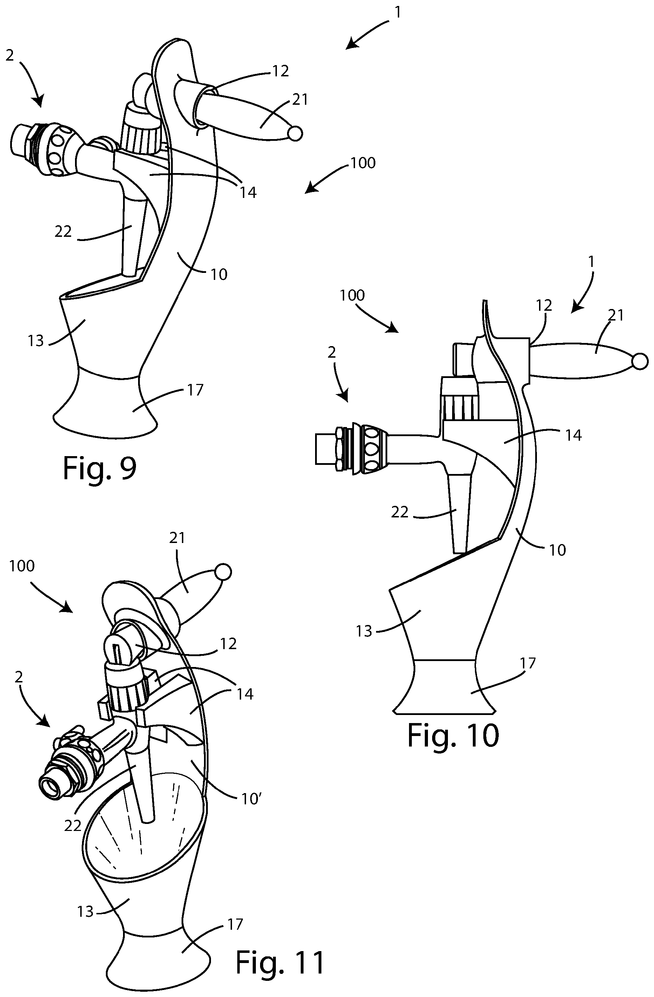

Figures 9 - 11 show a third locking device 1. The characteristics functionally analogous to those of the second embodiment will be indicated with the same numerical reference.

In this third embodiment, the funnel-shaped portion 13 has an opposing flare 17 at the ending portion of said funnel-shaped portion 13. In other words, it has a double opposing flare, a first one with the wider portion facing towards the hooking means 14 and locking means 11 of the device in such a way that, during use, it is facing the nozzle 22 of the faucet 2, and a second opposing flare 17 with the wider portion facing downwards.

This second flare 17 increases the ergonomics of the locking device 1 during installation by an operator.

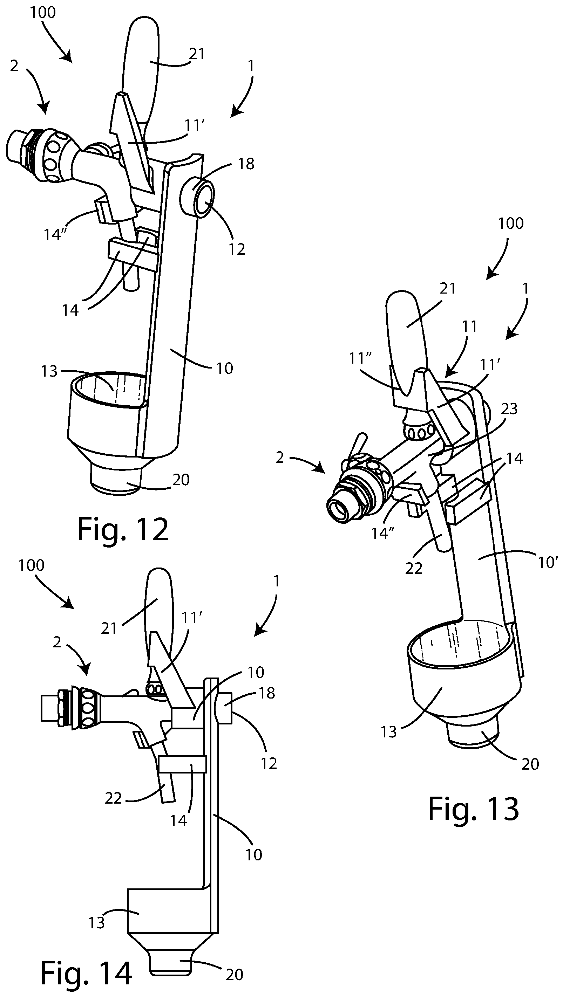

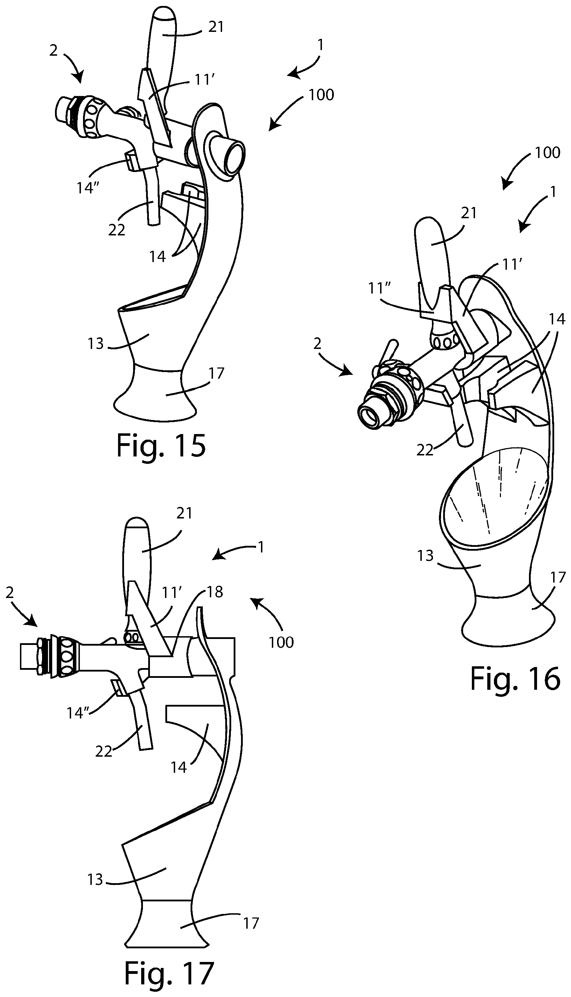

Furthermore, as shown in Figures 12 - 17, a kit according to the invention can be provided which includes:
a first locking device 1 according to the first embodiment and
a second locking device 1 according to the second or third embodiment.

In the kit, the body 10 of the first locking device 1 provides a tubular body 18, wherein the second locking device 1 is adapted to be coupled with the first locking device 1, by inserting the tubular body 18 of the first locking device 1 into the through hole 12 of the second locking device 1. In fact, this tubular body 18 of the first locking device 1 has an external diameter smaller than the diameter of the through hole 12 of the second or third locking device 1.

Finally, the locking device 1 can be made of plastic or other materials. In particular, the locking device 1 can be made using additive prototyping or three-dimensional moulding techniques.

Therefore, the locking device 1 according to the invention can be used in a system for sanitising faucets for beverages and can provide a tank containing a sanitising solution, as previously described. Such a tank being adapted to be connected to the pipes that form the system to be sanitised and therefore with the respective faucets.

Furthermore, the system can provide a container adapted to be in fluid connection with the nozzle of one or more faucets of the system to be sanitised.

Thanks to the locking device according to the invention, the faucet assumes a dispensing position and the sanitising solution flows from the faucet to then be collected in a drain or in said container.

Again, as previously described, the system can comprise a logic control unit and one or more sensors connected to said locking device.

In the foregoing the preferred embodiments have been described and variants of the present invention have been suggested, but it should be understood that those skilled in the art will be able to make modifications and changes without thereby departing from the relative scope of protection, as defined by the attached claims.

## Claims

1. A locking device (1) for a beverage dispensing faucet (2), said faucet (2) comprising a nozzle (22) for dispensing liquids and a lever (21) for allowing/preventing the dispensing of said liquids by assuming a dispensing position or a closed position,
wherein said locking device (1) comprises a body (10) on which locking means (11) for locking said lever (21) of said faucet (2) in the dispensing position and hooking means (14) for hooking to a portion of said faucet (2) are arranged, said locking device (1) being **characterized in that**
said locking means are a first hook (11) having an "L-shaped" profile,
wherein said hooking means are a second hook (14) having an "L-shaped" profile,
said first and second hooks (11, 14) having their respective first arms (11'; 14') fixed on opposite sides of said body (10), with respect to a first horizontal (x) axis, and their respective second arms (11"; 14") facing each other transversely to said first horizontal (x) axis,
**in that** said body (10) comprises a through hole (19) having the centre of symmetry arranged on said first horizontal (x) axis, said hole (19) being adapted to house one end (23) of said faucet (2), and **in that**
said locking device (1) is configured in such a way that, during use, when the second arm (14") of said second hook (14) is hooked to said faucet (2), the second arm (11") of said first hook (11) is hooked to said lever (21) locking it in said dispensing position.

2. The locking device (1) according to the previous claim, wherein said hooking means (14) comprise a first sensor configured to detect the hooking/unhooking of said locking device (1) to/from said faucet (2).

3. The locking device (1) according to any one of the preceding claims, wherein said respective first arms (11'; 14') of said first and second hooks (11; 14) are oriented on axes (t₁₁, t₁₄) mutually diverging with respect to the first horizontal (x) axis of said body (10) and lying on respective planes parallel to the vertical (XY) plane of said body (10).

4. The locking device (1) according to any one of the preceding claims, wherein said respective second arms (11"; 14") have a bevel (15) at their ending part to facilitate gripping.

5. The locking device (1) according to any one of the preceding claims, wherein said body (10) comprises a flat portion (10') extending beyond said locking means (11; 12) and hooking means (14), said flat portion (10') being configured to direct the flow of a sanitising liquid in a tank, preventing the dispersion of drops of said liquid.

6. The locking device (1) according to any one of the preceding claims, wherein said body (10) comprises a funnel-shaped portion (13) for conveying the liquid dispensed from the nozzle (22) of said faucet (2), said funnel-shaped portion (13) being arranged on said body (10) below said locking means (11; 12) and said hooking means (14).

7. The locking device (1) according to the preceding claim, wherein the lower part or stem (20) of said funnel-shaped portion (13) comprises a retaining device configured to allow the coupling/decoupling of said funnel-shaped portion (13) with a drain pipe.

8. The locking device (1) according to claim 6 or 7, wherein said funnel-shaped portion (13) comprises a second sensor configured to detect the filling level of said funnel-shaped portion (13).

9. A kit comprising a first locking device (1) according to any one of claims 1 - 4 and a second locking device (1)for a beverage dispensing faucet (2),
wherein said second locking device (1) comprises a body (10) having a through hole (12) acting as locking means for locking said lever (21) of said faucet (2) in said dispensing position and a pair of opposing hooks (14) arranged on said body (10) acting as hooking means for hooking to a portion of said faucet (2), said second locking device (1) being configured in such a way that, during use, when said pair of hooks (14) is hooked to said faucet (2), said lever (21) is inserted in said through hole (12) locking itself in said dispensing position,
wherein the body (10) of said first locking device (1) provides a tubular body (18),
wherein said second locking device (1) is adapted to be coupled with said first locking device (1) by inserting said tubular body (18) of said first locking device (1) in said through hole (12) of said second locking device (1).

10. Kit according to the preceding claim, wherein said pair of hooks (14) of said second locking device (1) comprises a linear concavity (16).

11. Kit according to any one of claims 9 - 10, wherein said body (10) of said second locking device (1) comprises a flat portion (10') extending beyond said through hole (12) and said pair of hooks (14), said flat portion (10') being configured to direct the flow of a sanitising liquid in a tank, preventing the dispersion of drops of said liquid.

12. Kit according to any one of claims 9 - 11, wherein said body (10) of said second locking device (1) comprises a funnel-shaped portion (13) for conveying the liquid dispensed from the nozzle (22) of said faucet (2), said funnel-shaped portion (13) being arranged on said body (10) below said through hole (12) and said pair of hooks (14).

13. Kit according to the preceding claim, wherein the lower part or stem (20) of said funnel-shaped portion (13) of said second locking device (1) comprises a retaining device configured to allow the coupling/decoupling of said funnel-shaped portion (13) with a drain pipe.

14. Kit according to claim 12 or 13, wherein said funnel-shaped portion (13) of said second locking device (1) comprises a second sensor configured to detect the filling level of said funnel-shaped portion (13).

15. Use of the locking device (1) according to any one of claims 1 - 8 for locking the lever (21) of a liquid beverage dispensing faucet (2) in the dispensing position.

16. A system for sanitising a faucet (2) for dispensing beverages, said system comprising
- a logic control unit,
- a locking device (1) according to any one of claims 2 or 8.

17. An assembly (100) comprising a beverage dispensing faucet (2), said faucet (2) comprising a nozzle (22) for dispensing liquids, and a lever (21) to allow/prevent the dispensing of said liquids by assuming a dispensing position or a closed position, said assembly (100) further comprising a locking device (1) according to any one of claims 1 - 8 , said assembly (100) being configured in such a way that when said hooking means (14) of said locking device (1) are hooked to said faucet (2), said locking means (11) act on said lever (21) of said faucet (1) which assumes said dispensing position for the continuous dispensing of liquids.

18. The assembly (100) according to the preceding claim, wherein said faucet (2) has a body (24) from which said nozzle (22) and said lever (21) extend along opposite directions of a vertical (y) axis, wherein said body (24) extends along a horizontal (x) axis, substantially transverse to the vertical (y) axis and having a rear portion (25) for the connection to a supply pipe for the liquid to be dispensed, and a front end (23), said front portion (23) and said rear portion (25) being arranged on opposite ends of said body (24) along said horizontal (x) axis, wherein when said locking device (1) is hooked to said faucet (2), it hooks at the front portion (23) of said faucet (2).

## Patentansprüche

1. Verriegelungsvorrichtung (1) für einen Getränkeausgabehahn (2), wobei der Hahn (2) eine Düse (22) zum Ausgeben von Flüssigkeiten und einen Hebel (21) zum Ermöglichen/Verhindern der Ausgabe der Flüssigkeiten durch Einnehmen einer Ausgabeposition oder einer geschlossenen Position umfasst,
wobei die Verriegelungsvorrichtung (1) einen Körper (10) umfasst, an dem eine Verriegelungseinrichtung (11) zum Verriegeln des Hebels (21) des Wasserhahns (2) in der Abgabeposition und eine Einhakeinrichtung (14) zum Einhaken an einem Teil des Wasserhahns (2) angeordnet sind, wobei die Verriegelungsvorrichtung (1) **dadurch gekennzeichnet ist, dass**
die Verriegelungsmittel ein erster Haken (11) mit einem "L-förmigen" Profil sind, wobei die Einhakmittel ein zweiter Haken (14) mit einem "L-förmigen" Profil sind,
wobei die ersten und zweiten Haken (11, 14) mit ihren jeweiligen ersten Armen (11'; 14') an gegenüberliegenden Seiten des Körpers (10) in Bezug auf eine erste horizontale (x) Achse befestigt sind und ihre jeweiligen zweiten Arme (11"; 14") einander quer zu der ersten horizontalen (x) Achse gegenüberliegen,
dass der Körper (10) ein durchgehendes Loch (19) aufweist, dessen Symmetriezentrum auf der ersten horizontalen (x) Achse angeordnet ist, wobei das Loch (19) geeignet ist, ein Ende (23) des Hahns (2) aufzunehmen, und dass
die Verriegelungsvorrichtung (1) so konfiguriert ist, dass während des Gebrauchs, wenn der zweite Arm (14") des zweiten Hakens (14) an dem Wasserhahn (2) eingehängt ist, der zweite Arm (11") des ersten Hakens (11) an dem Hebel (21) eingehängt ist, der ihn in der Abgabeposition verriegelt.

2. Verriegelungsvorrichtung (1) nach dem vorhergehenden Anspruch, wobei die Einhakmittel (14) einen ersten Sensor umfassen, der so konfiguriert ist, dass er das Einhaken/Aushaken der Verriegelungsvorrichtung (1) an/von dem Wasserhahn (2) erfasst.

3. Verriegelungsvorrichtung (1) nach einem der vorhergehenden Ansprüche, wobei die jeweiligen ersten Arme (11'; 14') des ersten und zweiten Hakens (11; 14) auf Achsen (t₁₁, t₁₄) ausgerichtet sind, die in Bezug auf die erste horizontale (x) Achse des Körpers (10) divergieren und auf jeweiligen Ebenen parallel zur vertikalen (XY) Ebene des Körpers (10) liegen.

4. Verriegelungsvorrichtung (1) nach einem der vorhergehenden Ansprüche, wobei die jeweiligen zweiten Arme (11"; 14") an ihrem Endteil eine Abschrägung (15) aufweisen, um das Greifen zu erleichtern.

5. Verriegelungsvorrichtung (1) nach einem der vorhergehenden Ansprüche, wobei der Körper (10) einen flachen Abschnitt (10') umfasst, der sich über die Verriegelungsmittel (11; 12) und die Einhakmittel (14) hinaus erstreckt, wobei der flache Abschnitt (10') so konfiguriert ist, dass er den Fluss einer Desinfektionsflüssigkeit in einem Tank lenkt und die Dispersion von Tropfen der Flüssigkeit verhindert.

6. Verriegelungsvorrichtung (1) nach einem der vorhergehenden Ansprüche, wobei der Körper (10) einen trichterförmigen Abschnitt (13) zum Fördern der von der Düse (22) des Hahns (2) abgegebenen Flüssigkeit aufweist, wobei der trichterförmige Abschnitt (13) an dem Körper (10) unter den Verriegelungsmitteln (11; 12) und den Einhakmitteln (14) angeordnet ist.

7. Verriegelungsvorrichtung (1) nach dem vorhergehenden Anspruch, wobei der untere Teil oder Stiel (20) des trichterförmigen Abschnitts (13) eine Haltevorrichtung umfasst, die so konfiguriert ist, dass sie das Koppeln/Entkoppeln des trichterförmigen Abschnitts (13) mit einem Abflussrohr ermöglicht.

8. Verriegelungsvorrichtung (1) nach Anspruch 6 oder 7, wobei der trichterförmige Abschnitt (13) einen zweiten Sensor umfasst, der so konfiguriert ist, dass er den Füllstand des trichterförmigen Abschnitts (13) erfasst.

9. Bausatz mit einer ersten Verriegelungsvorrichtung (1) nach einem der Ansprüche 1 - 4 und einer zweiten Verriegelungsvorrichtung (1) für eine Getränkeschankarmatur (2),
wobei die zweite Verriegelungsvorrichtung (1) einen Körper (10) mit einem Durchgangsloch (12), das als Verriegelungsmittel zum Verriegeln des Hebels (21) des Wasserhahns (2) in der Abgabeposition wirkt, und ein Paar gegenüberliegender Haken (14) umfasst, die an dem Körper (10) angeordnet sind und als Einhakmittel zum Einhaken an einem Teil des Wasserhahns (2) wirken, wobei die zweite Verriegelungsvorrichtung (1) so konfiguriert ist, dass während der Verwendung, wenn das Paar von Haken (14) an dem Wasserhahn (2) eingehakt ist, der Hebel (21) in das Durchgangsloch (12) eingeführt wird und sich selbst in der Abgabeposition verriegelt,
wobei der Körper (10) der ersten Verriegelungsvorrichtung (1) einen rohrförmigen Körper (18) aufweist,
wobei die zweite Verriegelungsvorrichtung (1) geeignet ist, mit der ersten Verriegelungsvorrichtung (1) gekoppelt zu werden, indem der rohrförmige Körper (18) der ersten Verriegelungsvorrichtung (1) in das Durchgangsloch (12) der zweiten Verriegelungsvorrichtung (1) eingeführt wird.

10. Bausatz nach dem vorhergehenden Anspruch, wobei das Hakenpaar (14) der zweiten Verriegelungsvorrichtung (1) eine lineare Konkavität (16) aufweist.

11. Bausatz nach einem der Ansprüche 9-10, wobei der Körper (10) der zweiten Verriegelungsvorrichtung (1) einen flachen Abschnitt (10') umfasst, der sich über das Durchgangsloch (12) und das Paar Haken (14) hinaus erstreckt, wobei der flache Abschnitt (10') so konfiguriert ist, dass er den Fluss einer Desinfektionsflüssigkeit in einem Tank lenkt und die Dispersion von Tropfen der Flüssigkeit verhindert.

12. Bausatz nach einem der Ansprüche 9-11, wobei der Körper (10) der zweiten Verriegelungsvorrichtung (1) einen trichterförmigen Abschnitt (13) zum Fördern der von der Düse (22) des Hahns (2) abgegebenen Flüssigkeit aufweist, wobei der trichterförmige Abschnitt (13) an dem Körper (10) unterhalb des Durchgangslochs (12) und des Paars von Haken (14) angeordnet ist.

13. Bausatz nach dem vorhergehenden Anspruch, wobei der untere Teil oder Stiel (20) des trichterförmigen Abschnitts (13) der zweiten Verriegelungsvorrichtung (1) eine Haltevorrichtung umfasst, die so konfiguriert ist, dass sie das Koppeln/Entkoppeln des trichterförmigen Abschnitts (13) mit einem Abflussrohr ermöglicht.

14. Bausatz nach Anspruch 12 oder 13, wobei der trichterförmige Abschnitt (13) der zweiten Verriegelungsvorrichtung (1) einen zweiten Sensor umfasst, der so konfiguriert ist, dass er den Füllstand des trichterförmigen Abschnitts (13) erfasst.

15. Verwendung der Verriegelungsvorrichtung (1) nach einem der Ansprüche 1-8 zum Verriegeln des Hebels (21) einer Flüssigkeitsgetränkeausgabearmatur (2) in der Ausgabestellung.

16. System zur Desinfektion eines Wasserhahns (2) für die Ausgabe von Getränken, wobei das System Folgendes umfasst
- eine logische Steuereinheit,
- eine Verriegelungsvorrichtung (1) nach einem der Ansprüche 2 oder 8.

17. Bausatz (100), der einen Getränkeausgabehahn (2) umfasst, wobei der Hahn (2) eine Düse (22) zur Ausgabe von Flüssigkeiten und einen Hebel (21) umfasst, um die Ausgabe der Flüssigkeiten zu ermöglichen/zu verhindern, indem er eine Ausgabeposition oder eine geschlossene Position einnimmt, wobei die Baugruppe (100) ferner eine Verriegelungsvorrichtung (1) nach einem der Ansprüche 1-8 umfasst, wobei die Anordnung (100) so konfiguriert ist, dass, wenn die Einhakmittel (14) der Verriegelungsvorrichtung (1) mit dem Hahn (2) verbunden sind, die Verriegelungsmittel (11) auf den Hebel (21) des Hahns (1) einwirken, der die Abgabeposition für die kontinuierliche Abgabe von Flüssigkeiten einnimmt.

18. Bausatz (100) nach dem vorhergehenden Anspruch, wobei der Hahn (2) einen Körper (24) aufweist, von dem sich die Düse (22) und der Hebel (21) entlang entgegengesetzter Richtungen einer vertikalen (y) Achse erstrecken, wobei sich der Körper (24) entlang einer horizontalen (x) Achse im Wesentlichen quer zu der vertikalen (y) Achse erstreckt und einen hinteren Abschnitt (25) für den Anschluss an ein Versorgungsrohr für die abzugebende Flüssigkeit aufweist, und ein vorderes Ende (23), wobei der vordere Abschnitt (23) und der hintere Abschnitt (25) an gegenüberliegenden Enden des Körpers (24) entlang der horizontalen (x) Achse angeordnet sind, wobei die Verriegelungsvorrichtung (1), wenn sie an den Hahn (2) gehängt wird, an dem vorderen Abschnitt (23) des Hahns (2) einhängt.

## Revendications

1. Dispositif de verrouillage (1) pour un robinet de distribution de boissons (2), ledit robinet (2) comprenant une buse (22) pour la distribution de liquides et un levier (21) pour permettre/empêcher la distribution de ces liquides en prenant une position de distribution ou une position fermée,
dans lequel ledit dispositif de verrouillage (1) comprend un corps (10) sur lequel sont disposés des moyens de verrouillage (11) pour verrouiller ledit levier (21) dudit robinet (2) en position de distribution et des moyens d'accrochage (14) pour s'accrocher à une partie dudit robinet (2), ledit dispositif de verrouillage (1) étant **caractérisé en ce que**
lesdits moyens de verrouillage sont un premier crochet (11) ayant un "profil en L", dans lequel lesdits moyens d'accrochage sont un second crochet (14) ayant un "profil en L",
ces premier et deuxième crochets (11, 14) ont leurs premiers bras respectifs (11'; 14') fixés sur les côtés opposés dudit corps (10), par rapport à un premier axe horizontal (x), et leurs deuxièmes bras respectifs (11"; 14") se faisant face transversalement audit premier axe horizontal (x),
**en ce que** ledit corps (10) comprend un trou traversant (19) dont le centre de symétrie est disposé sur ledit premier axe horizontal (x), ledit trou (19) étant adapté pour loger une extrémité (23) dudit robinet (2), et **en ce que**
ledit dispositif de verrouillage (1) est configuré de telle sorte que, en cours d'utilisation, lorsque le second bras (14") dudit second crochet (14) est accroché audit robinet (2), le second bras (11") dudit premier crochet (11) est accroché audit levier (21) qui le verrouille dans ladite position de distribution.

2. Dispositif de verrouillage (1) selon la revendication précédente, dans lequel lesdits moyens d'accrochage (14) comprennent un premier capteur configuré pour détecter l'accrochage/décrochage dudit dispositif de verrouillage (1) au/du dit robinet (2).

3. Dispositif de verrouillage (1) selon l'une quelconque des revendications précédentes, dans lequel lesdits premiers bras respectifs (11'; 14") desdits premier et second crochets (11; 14) sont orientés sur des axes (t₁₁, t₁₄) mutuellement divergents par rapport au premier axe horizontal (x) dudit corps (10) et situés sur des plans respectifs parallèles au plan vertical (XY) dudit corps (10).

4. Dispositif de verrouillage (1) selon l'une quelconque des revendications précédentes, dans lequel lesdits seconds bras respectifs (11"; 14") présentent un biseau (15) dans leur partie terminale pour faciliter la préhension.

5. Dispositif de verrouillage (1) selon l'une quelconque des revendications précédentes, dans lequel ledit corps (10) comprend une partie plate (10') s'étendant au-delà desdits moyens de verrouillage (11; 12) et des moyens d'accrochage (14), ladite partie plate (10') étant configurée pour diriger l'écoulement d'un liquide d'assainissement dans un réservoir, empêchant la dispersion de gouttes dudit liquide.

6. Dispositif de verrouillage (1) selon l'une quelconque des revendications précédentes, dans lequel ledit corps (10) comprend une partie en forme d'entonnoir (13) pour acheminer le liquide distribué par la buse (22) dudit robinet (2), ladite partie en forme d'entonnoir (13) étant disposée sur ledit corps (10) en dessous desdits moyens de verrouillage (11; 12) et desdits moyens d'accrochage (14).

7. Dispositif de verrouillage (1) selon la revendication précédente, dans lequel la partie inférieure ou la tige (20) de ladite partie en forme d'entonnoir (13) comprend un dispositif de retenue configuré pour permettre le couplage/découplage de ladite partie en forme d'entonnoir (13) avec un tuyau d'évacuation.

8. Dispositif de verrouillage (1) selon la revendication 6 ou 7, dans lequel ladite partie en forme d'entonnoir (13) comprend un second capteur configuré pour détecter le niveau de remplissage de ladite partie en forme d'entonnoir (13).

9. Kit comprenant un premier dispositif de verrouillage (1) selon l'une des revendications 1 - 4 et un second dispositif de verrouillage (1) pour un robinet de distribution de boissons (2),
dans lequel ledit second dispositif de verrouillage (1) comprend un corps (10) ayant un trou traversant (12) agissant comme moyen de verrouillage pour verrouiller ledit levier (21) dudit robinet (2) dans ladite position de distribution et une paire de crochets opposés (14) disposés sur ledit corps (10) agissant comme moyen d'accrochage pour s'accrocher à une partie dudit robinet (2), Ledit second dispositif de verrouillage (1) est configuré de manière à ce que, en cours d'utilisation, lorsque ladite paire de crochets (14) est accrochée audit robinet (2), ledit levier (21) est inséré dans ledit trou de passage (12), se verrouillant lui-même dans ladite position de distribution,
dans lequel le corps (10) dudit premier dispositif de verrouillage (1) est un corps tubulaire (18),
dans lequel ledit second dispositif de verrouillage (1) est adapté pour être couplé avec ledit premier dispositif de verrouillage (1) en insérant ledit corps tubulaire (18) dudit premier dispositif de verrouillage (1) dans ledit trou de passage (12) dudit second dispositif de verrouillage (1).

10. Kit selon la revendication précédente, dans lequel ladite paire de crochets (14) dudit second dispositif de verrouillage (1) comprend une concavité linéaire (16).

11. Kit selon l'une quelconque des revendications 9 - 10, dans lequel ledit corps (10) dudit second dispositif de verrouillage (1) comprend une partie plate (10') s'étendant au-delà dudit trou traversant (12) et de ladite paire de crochets (14), ladite partie plate (10') étant configurée pour diriger l'écoulement d'un liquide d'assainissement dans un réservoir, empêchant la dispersion de gouttes dudit liquide.

12. Kit selon l'une quelconque des revendications 9 - 11, dans lequel ledit corps (10) dudit second dispositif de verrouillage (1) comprend une partie en forme d'entonnoir (13) pour acheminer le liquide distribué par la buse (22) dudit robinet (2), ladite partie en forme d'entonnoir (13) étant disposée sur ledit corps (10) en dessous dudit trou de passage (12) et de ladite paire de crochets (14).

13. Kit selon la revendication précédente, dans lequel la partie inférieure ou la tige (20) de ladite partie en forme d'entonnoir (13) dudit second dispositif de verrouillage (1) comprend un dispositif de retenue configuré pour permettre le couplage/découplage de ladite partie en forme d'entonnoir (13) avec un tuyau d'évacuation.

14. Kit selon la revendication 12 ou 13, dans lequel ladite partie en forme d'entonnoir (13) dudit second dispositif de verrouillage (1) comprend un second capteur configuré pour détecter le niveau de remplissage de ladite partie en forme d'entonnoir (13).

15. Utilisation du dispositif de verrouillage (1) selon l'une quelconque des revendications 1 - 8 pour verrouiller le levier (21) d'un robinet de distribution de boissons liquides (2) dans la position de distribution.

16. Système de désinfection d'un robinet (2) pour la distribution de boissons, comprenant
- une unité de commande logique,
- un dispositif de verrouillage (1) selon l'une quelconque des revendications 2 ou 8.

17. Ensemble (100) comprenant un robinet (2) de distribution de boissons, ledit robinet (2) comprenant une buse (22) pour la distribution de liquides, et un levier (21) pour permettre/empêcher la distribution desdits liquides en prenant une position de distribution ou une position fermée, ledit ensemble (100) comprenant en outre un dispositif de verrouillage (1) selon l'une quelconque des revendications 1 - 8, ledit ensemble (100) étant configuré de telle sorte que lorsque lesdits moyens d'accrochage (14) dudit dispositif de verrouillage (1) sont accrochés audit robinet (2), lesdits moyens de verrouillage (11) agissent sur ledit levier (21) dudit robinet (1) qui prend ladite position de distribution pour la distribution continue de liquides.

18. Ensemble (100) selon la revendication précédente, dans lequel ledit robinet (2) a un corps (24) à partir duquel ladite buse (22) et ledit levier (21) s'étendent le long de directions opposées d'un axe vertical (y), dans lequel ledit corps (24) s'étend le long d'un axe horizontal (x), sensiblement transversal à l'axe vertical (y) et ayant une partie arrière (25) pour la connexion à un tuyau d'alimentation pour le liquide à distribuer, et une extrémité avant (23), ladite partie avant (23) et ladite partie arrière (25) étant disposées sur les extrémités opposées dudit corps (24) le long dudit axe horizontal (x), dans lequel lorsque ledit dispositif de verrouillage (1) est accroché audit robinet (2), il s'accroche à la partie avant (23) dudit robinet (2).
